Europäisches Patentamt

**European Patent Office**

Office européen des brevets

(11) Publication number: **0 433 035 A1**

(12)
# EUROPEAN PATENT APPLICATION

(21) Application number: **90313492.2**

(22) Date of filing: **12.12.90**

(51) Int. Cl.⁵: **C02F 1/48**

(30) Priority: **12.12.89 GB 8928075**

(43) Date of publication of application:
**19.06.91 Bulletin 91/25**

(84) Designated Contracting States:
**AT BE CH DE DK ES FR GB GR IT LI LU NL SE**

(71) Applicant: **Jackson, Peter**
**35 Lonsdale Drive**
**Sittingbourne, Kent ME10 1TS(GB)**

Applicant: **Drury, Simon Phillip**
**47 Hastings Avenue**

**Margate, Kent CT9 2SG(GB)**

(72) Inventor: **Jackson, Peter**
**35 Lonsdale Drive**
**Sittingbourne, Kent ME10 1TS(GB)**
Inventor: **Drury, Simon Phillip**
**47 Hastings Avenue**
**Margate, Kent CT9 2SG(GB)**

(74) Representative: **Prentice, Raymond Roy**
**R.R. Prentice & Co. The Hop Exchange 24**
**Southwark Street**
**London SE1 1TY(GB)**

(54) **Magnetic water softener.**

(57) A device for the magnetic treatment of water or other liquid comprises a casing (10) consisting of two elongate half-sections (11 ,12) which are U-shaped in cross-section and are adapted to fit around a length of water pipe (20) or the like. Each half casing is provided on each side with a socket (13) and bayonet fitting (14) which are so located that they co-operate with, respectively, the bayonet fittings and sockets on the other half of the casing. The half casings (11, 12) are each adapted to receive a series of bar magnets (15, 16) which are located on respective base plates (17, 18) secured in the respective casing halves. If such a device is fitted around a water pipe, it will be found that there is marked reduction in the formation of scale.

FIG.1

# MAGNETIC WATER SOFTENER

This invention relates to a device for the magnetic treatment of water or other liquids in order to reduce or eliminate the formation of scale deposits of calcium carbonate on pipes, boilers and the like.

It is already known that if water is passed through a magnetic field the formation of scale and corrosion in a boiler is considerably reduced. An apparatus for treating water in this manner is described and illustrated in British Patent Specification No. 878525. The apparatus described in this specification was, however, rather complicated and cumbersome and the present invention aims to solve the same problem by far simpler and cheaper means.

According to the invention, there is provided a device for the magnetic treatment of water or other liquids which comprises a casing consisting of two parts, each part being adapted to house a permanent magnet and to fit around a portion of the circumference of a pipe or like tubular member intended to convey water or other liquid, the two parts of the casing being provided with releasable fastening means whereby, when the parts are fitted together, they can be held in place completely surrounding a section of said pipe or like tubular member.

Preferably, the two parts of the casing comprise two substantially identical halves although this is not essential. If the casing is made in two halves, each half may be provided on one side with a bayonet-like fitting and on the other side with a socket adapted to receive and retain the bayonet-like fitting on the other half. According to a preferred embodiment, each half is provided on each side with a socket and a bayonet-like fitting adapted to co-operate with, respectively, corresponding bayonet-like fittings and sockets on the other half of the casing.

The magnets preferably take the form of bar magnets which are so arranged in their respective casing parts that unlike poles are located opposite to one another. This arrangement not only ensures that the casing will remain in place on a pipe or like tubular member, by virtue of the magnetic attraction of the poles, but is also essential for the magnetic treatment of water. More than one magnet may be provided in each casing part if desired.

The magnets are desirably retained in the casing parts by means of covers which may be detachably fitted to the casing parts.

The invention will now be further described, by way of example, with reference to the drawings, in which:-

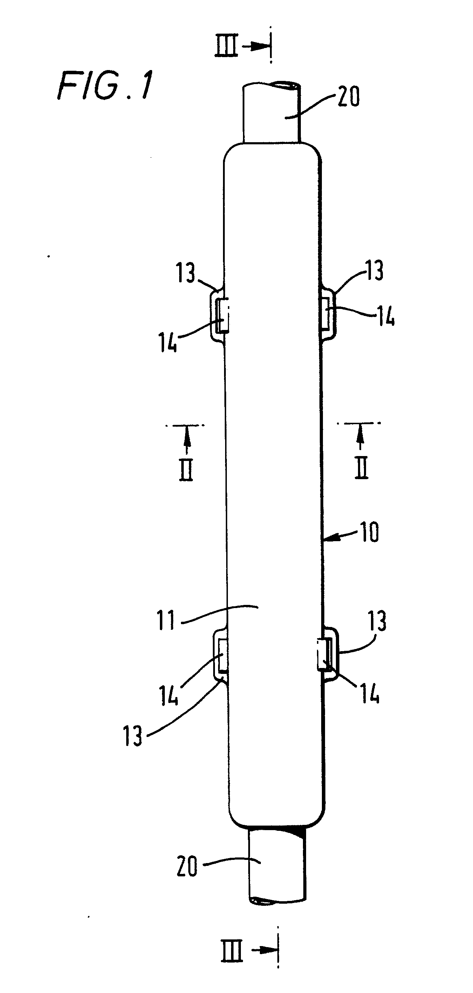

Fig. 1 is a plan view of one embodiment of a device according to the invention fitted to a pipe;

Fig. 2 is a section taken on the line II-II in Fig. 1 in the direction of the arrows but with the pipe omitted in the interests of clarity; and

Fig. 3 is a section taken on the line III-III in Fig. 1 in the direction of the arrows, again with the pipe omitted.

Referring to the drawings, the device comprises a casing 10 consisting of two elongate half-sections 11, 12 which are U-shaped in cross-section. Each half casing is provided on each side with a socket 13 and a bayonet fitting 14, the sockets and bayonet fittings being so located that they co-operate with, respectively, the bayonet fittings and sockets on the other half of the casing.

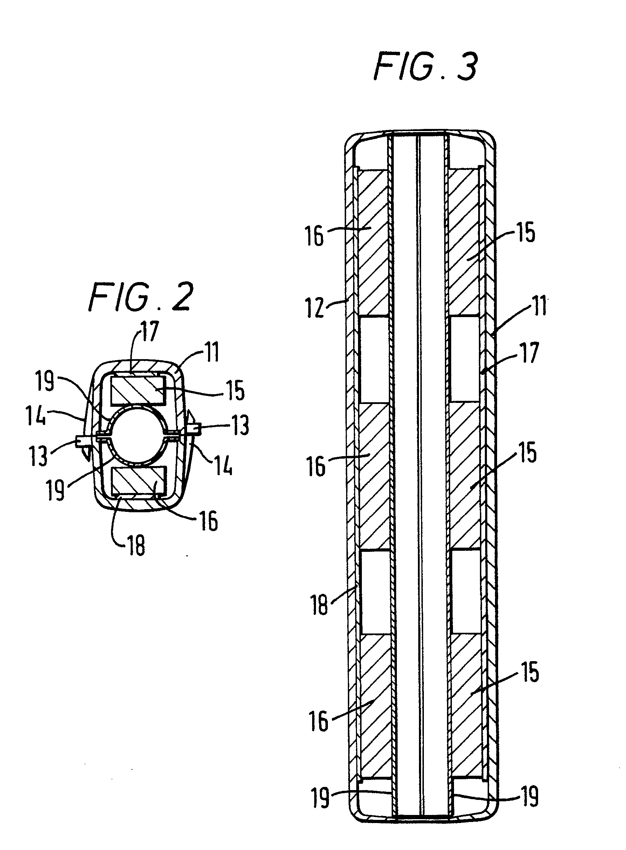

The half casings 11 and 12 are each adapted to receive a series of bar magnets 15 and 16 respectively which are located on respective base plates 17 and 18. The magnets 15 and 16 are so arranged that their opposite poles face one another. Thus, by way of example, the N poles of the magnets 15 may be located towards the upper end of the casing in Fig. 3 while the N poles of the magnets 16 are located towards the lower end of the casing in Fig. 3. The base plates 17 and 18 are desirably secured to the respective casing halves by a suitable adhesive and are made of a ferrous material such as mild steel. The magnets 15 and 16 can then be retained on the respective base plates 17 and 18 by simple magnetic attraction.

The ends of each half casing 11, 12 are closed except for a semi-circular cut-out which is adapted to fit around a pipe 20 or like tubular member of suitable diameter. A cover member 19 which is substantially semi-circular in cross-section but with straight flanges along each of its edges is adapted to be clipped into each of the casing halves 11, 12 to ensure that the magnets 15, 16 and magnet plates 17, 18 are retained in the respective casing halves. The cover members 19 may be detachably clipped into place or they may be fixed permanently in position.

It has been found that if a device according to the invention is fitted around a water pipe, there is a marked reduction in the formation of scale. It is believed that this is because the magnetic fields created by the magnets alter the polarity of the ions in the water thus suspending calcium and reducing mineral deposits.

The casing halves and cover members are preferably made from a suitable moulded plastics material although other non-ferrous materials may be used if desired and the casing halves and cover members need not be made of the same material.

The casing can be made in a range of sizes to enable the device to be fitted to a wide range of pipes of different diameters. It is envisaged, however, that the casing will normally be made to be fitted to pipes of standard diameters currently in use.

The invention is not restricted to the above-described embodiment but modifications and variations may be made without departing from the scope of the invention. For example, although the drawings show the device fitted with three pairs of magnets, more or less pairs of magnets may be provided, the length of the casing being adapted accordingly.

The device according to the invention can be fitted simply and quickly to existing pipework without requiring any plumbing or modification of the pipework and it requires no maintenance. It therefore provides a quick and easy and cheaper alternative to existing systems and represents a distinct improvement on such systems.

## Claims

1. A device for the magnetic treatment of water or other liquid which comprises a casing consisting of two parts, each part being adapted to house a permanent magnet and to fit around a portion of the circumference of a pipe or other tubular member intended to convey water or other liquid, the two parts of the casing being provided with releasable fastening means whereby, when the parts are fitted together, they can be held in place completely surrounding a section of said pipe or like tubular member.

2. A device according to claim 1, wherein the two parts of the casing comprise two substantially identical halves.

3. A device according to claim 2, wherein each half of the casing is provided on one side with a bayonet-like fitting and on the other side with a socket adapted to receive and retain the bayonet-like fitting on the other half.

4. A device according to claim 3, wherein each half of the casing is provided on each side with a socket and a bayonet-like fitting adapted to co-operate with, respectively, corresponding bayonet-like fittings and sockets on the other half of the casing.

5. A device according to any preceding claim, wherein the magnets take the form of bar magnets which are so arranged in their respective casing parts that unlike poles are located opposite to one another.

6. A device according to any preceding claim, wherein a plurality of magnets are provided in each casing part.

7. A device according to any preceding claim, wherein the magnets are retained in the respective casing parts by means of covers.

8. A device according to claim 7, wherein the covers are detachably fitted to the respective casing parts.

9. A device according to any preceding claim, wherein the magnets are located on respective base plates and wherein each base plate is secured to a respective part of the casing by means of a suitable adhesive.

10. A device according to claim 9, wherein each base plate is made of a ferrous material such as mild steel.

FIG.1

## FIG. 3

## FIG. 2

European
Patent Office

**EUROPEAN SEARCH
REPORT**

Application Number

**EP 90 31 3492**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 319 936  (C.SCHUBERT) <br> * the whole document * <br> - - - | 1,2,5 | C 02 F 1/48 |
| X | DE-U-9 001 355  (E.MOHR) <br> * the whole document * <br> - - - | 1-3,5 | |
| X | WO-A-8 903 808  (S.JENSEN) <br> * abstract * <br> - - - | 1 | |
| X | US-A-4 605 498  (P.A.KULISH) <br> * abstract; figure 4 * <br> - - - | 6 | |
| A | US-A-4 367 143  (R.K.CARPENTER) <br> * column 4, lines 18 - 29 * <br> - - - - - | 7-10 | |

TECHNICAL FIELDS
SEARCHED (Int. Cl.5)

C 02 F

The present search report has been drawn up for all claims

| Place of search | Date of completion of search | Examiner |
|---|---|---|
| The Hague | 05 February 91 | GONZALEZ ARIAS M.L. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

                                

& : member of the same patent family, corresponding
   document